# EUROPEAN PATENT APPLICATION

(11) **EP 0 769 712 A1**
(43) Date of publication of application: **23.04.1997**
(21) Application number: 95830422.2
(22) Date of filing: 10.10.1995
(51) Int. Cl.: G02B 23/00, G02B 26/08

(54) **A mirror structure with active optics**

(71) Applicant: FINMECCANICA S.p.A. AZIENDA ANSALDO, I-16128 Genova (IT)
(72) Inventor: Cai,Giulio, I-16156 Pegli (Genova) (IT)
(74) Representative: Falcetti, Carlo

(57) **Abstract**

A structure (5) with active optics particularly for reflecting telescopes (1) which has a simple structure, is economical to manufacture and is capable of being used in accordance with the principles of adaptive optics with extremely high precision in the correction of optical and atmospheric distortions, comprises a flexible sheet-like support (8), a mirror surface (10) formed on one face (9) of the sheet-like support (8), variable magnetic field generator means (21) in correspondence with the face of the sheet-like support (8) opposite the mirror surface (10), the sheet-like support (8) including at least one ferromagnetic layer (19) and being elastically deformable under the action of the variable magnetic field generator means (21).

## Description

The present invention relates to a mirror structure with active optics which has a flexible sheet-like support and a mirror surface formed on one face of the sheet-like support.

This type of mirror structure has an important application in the field of astronomical reflecting telescopes in which very large diameter mirror structures are used as the primary mirrors.

It is known that the greater the diameter of the primary mirror, which is the mirror which receives light directly from the heavens, the greater the sensitivity of the telescope.

The maximum distance at which a star or other celestial body can be observed in relation to its luminosity is dependent directly on this sensitivity.

It is also known that structures with active optics, which use flexible supports, have replaced monolithic mirror structures which are so-called because they are formed from a single rigid glass block of large dimensions.

The block was subsequently ground to obtain a mirror surface of the desired shape.

The process by which such monolithic structures were manufactured was extremely costly and gave very little guarantee of success, it often being necessary to cast numerous glass blocks in order to obtain a single mirror.

In current mirror structures with active optics a flexible support is used which is generally of a vitreous material with a thickness of several centimetres.

The lack of rigidity means that, as a result of its own weight, this structure deforms according to its inclination. Consequently the mirror surface deforms and causes optical distortion.

Such structures are also particularly sensitive to variations in working temperature.

In order to overcome such inevitable deformations, structures with active optics include a plurality of linear actuators which are located beneath the flexible support and support it whatever the inclination of the structure.

These actuators can be controlled individually to modify the shape of the mirror appropriately by exertion of a force which may even be of considerable intensity, causing displacements of the order of a millimetre with a precision of less than a hundredth of a millimetre.

Various types of linear actuator are known and used in mirror structures with active optics. They may for example be hydraulically or mechanically operated and are arranged in a regular matrix.

The structures of mirrors with active optics described above have several considerable disadvantages.

Although they have a good degree of precision at relatively low inclinations, they are unable to correct optical distortions satisfactorily at inclinations of about 45°.

Moreover they are structurally complicated and expensive and use complicated and bulky hydraulic circuits or mechanical lever systems.

Furthermore this type of mirror structure has structural limitations with regard to the diameter of the mirror surface.

Finally, the mirror structures described above cannot be used in the field of so-called adaptive optics.

An adaptive optic theoretically allows the shape of the mirror surface to be corrected to eliminate distortions in the wave front resulting from the atmosphere, that is, those distortions which are due to turbulence in the upper layers of the Earth's atmosphere and which currently impose a maximum limit on the definition obtainable with any optical system located on the Earth's surface.

Recent studies have shown that it is possible to construct optical systems which are able to detect the exact nature of atmospheric distortions in real time.

The application of these systems, which constitute the aforesaid adaptive optics, however, requires that the systems for correcting the shape of the mirror surface of a telescope mirror structure have a response frequency of the order of several Hertz.

The active optic mirror structures described above which use hydraulic or mechanical linear actuators require at least several seconds between one correction and the next.

These structures are thus unsuitable for use in the field of adaptive optics.

The technical problem which is at the root of the present invention lies in devising a mirror structure with active optics which enables the disadvantages mentioned with reference to the prior art to be overcome while at the same time satisfying these requirements.

This problem is solved by a mirror structure of the type specified which is characterised in that it includes a plurality of variable magnetic field generator means in correspondence with the face of the sheet-like support opposite the mirror surface, the sheet-like support including at least one ferromagnetic layer and being elastically deformable under the action of the variable magnetic field generator means.

The main advantage of the mirror structure with active optics according to the invention lies in the fact that it is structurally simple and cheap while enabling the shape of the mirror surface to be corrected extremely precisely even at large inclinations of the structure itself.

In addition, the mirror structure may be used in the field of adaptive optics since it allows the shape of the mirror surface to be corrected at frequencies of the order of several Hertz.

Further characteristics and advantages of the mirror structure according to the invention will become apparent from the description of one preferred embodiment given by way of non-limitative example with reference to the appended drawings, in which:
- figure 1 is a schematic sectional view of a reflecting telescope incorporating the mirror structure of the invention; and
- figure 2 is a schematic section of part of the mirror structure of figure 1.

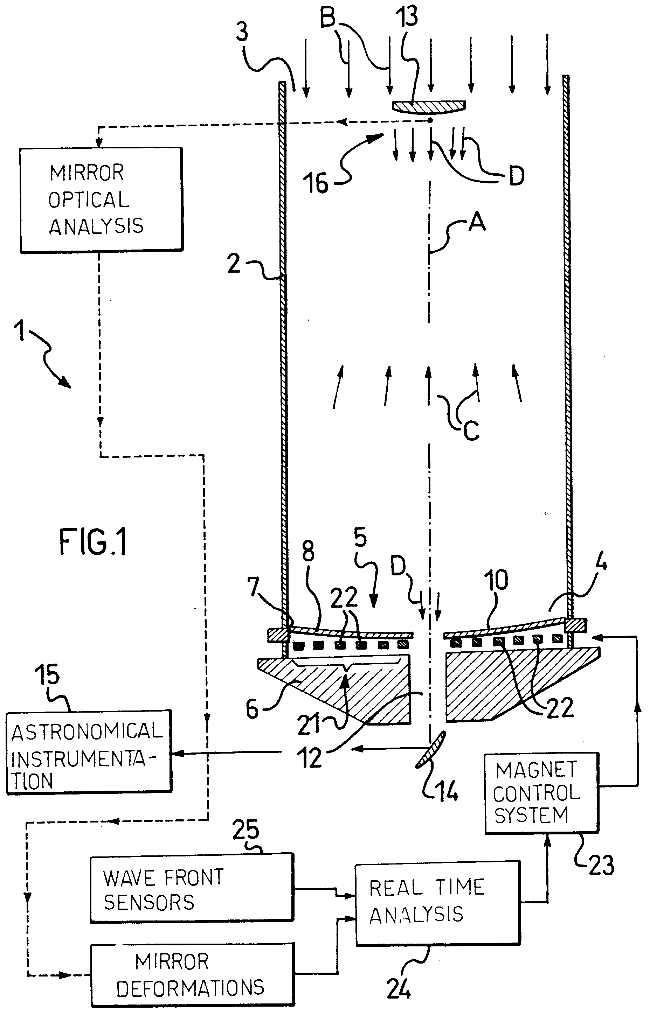

In figure 1 an astronomical reflecting telescope of the Cassegrain type is indicated 1.

It includes a cylindrical body 2 with an axis A supported by support and sighting means, not shown, and having an upper open end 3 and a lower end 4.

At the lower end 4, the telescope 1 includes a primary mirror 5 intended to receive a wave front B from the part of the heavens being observed.

This wave front is affected by atmospheric distortion caused by turbulence in the upper layers of the Earth's atmosphere.

The primary mirror 5 is constituted by a mirror structure with active optics according to the present invention.

The mirror structure 5 includes a support frame 6 connected to the cylindrical body 2 and defining a circular rim 7 facing the upper end 3 of the cylindrical body 2.

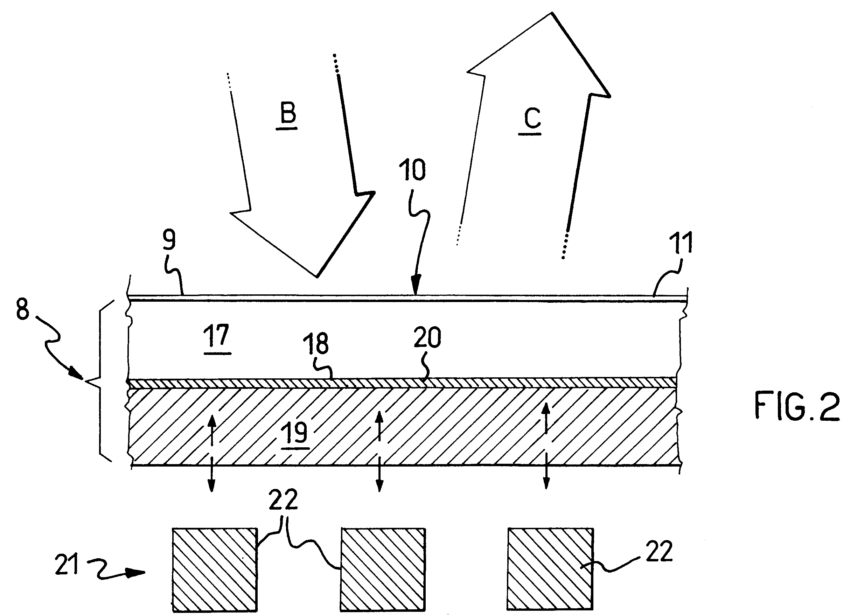

The periphery of a circular, flexible, sheet-like support 8 having an upper face 9 is located on the circular rim 7 (figure 2).

A mirror surface 10 is formed on the upper face 9 by means of a thin layer of aluminum 11 deposited by a conventional aluminating process.

At the centre of the sheet-like support 8, co-axial with the axis A of the cylindrical body 2, the mirror structure includes a through-hole 12.

The telescope 1 includes a secondary mirror 13 at a point intermediate the focus of the mirror surface 10 and the surface itself, the secondary mirror 13 being convex and receiving the wave front C reflected from the primary mirror 5 and returning it through the through-hole 12.

Beneath the through-hole 12, the telescope 1 includes a tertiary mirror 14 which receives the wave front D reflected from the secondary mirror 13 and deflects it to conventional astronomical instruments, generally indicated 15, located at the focal point of the optical system.

The telescope 1 further includes a system for monitoring the position of the mirror surface 10. This monitoring system, generally indicated 16, includes, for example, a laser pulse emitter, the pulses from which are reflected from the primary mirror 5 and subsequently picked up and processed to determine the profile of the mirror surface 10 exactly, for example by means of interferometry.

The monitoring system 16 thus provides a precise map of the entire mirror surface 10 and all the optical distortions due to surface deformations which affect it, these being caused, for example, by the weight of the sheet-like support 8 itself, by inclinations of the telescope 1 to the azimuth, and by thermal expansion of the support frame 6.

The sheet-like support 8 has a multi-layer structure which includes at least one first film 17, the upper face of which constitutes the upper face 9 of the sheet-like support 8 and which also has a lower face 18.

The first film 17 is of elastically deformable material such as, for example, a plastics material and its upper face 9 is smooth to support the thin aluminium layer 11 which forms the mirror surface 10 of the mirror structure 5 of the invention.

The sheet-like support 8 further includes at least one ferromagnetic layer 19 which is preferably at least partially permanently magnetised.

In a preferred embodiment of the mirror structure 5 of the invention, the ferromagnetic layer 19 comprises a film of magnetised rubber.

Alternatively the ferromagnetic layer 19 comprises a second film of plastics material in which discrete magnetic elements, for example based on ferrite or rare earths, are embedded.

The ferromagnetic layer 19 is joined to the first film 17 of plastics material, preferably by means of an epoxy glue 20.

The mirror structure 5 according to the invention further includes (figure 1) variable magnetic field generator means 21 located in correspondence with the face of the sheet-like support 8 opposite the mirror surface 10.

Moreover the sheet-like support 8 of the mirror structure 5 of the invention is elastically deformable under the action of the variable magnetic field generator means which may pull or push the ferromagnetic layer 19.

The variable magnetic field generator means 21 include a plurality of electromagnets 22 arranged in a predetermined matrix and controlled individually by a control system 23.

The control system 23 for controlling the individual electromagnets 22 is in turn controlled by a real-time analysis system 24 which receives data relating to the optical distortions of the mirror surface 10 from the monitoring system 16.

The analysis system 24 may also be able to receive information relating to distortions in the wave front B of atmospheric origin.

This information is supplied by suitable wave front sensors 25 which include, for example, emitters of laser pulses of predetermined frequency which are returned, in the form of light signals, from substances in the upper layers of the atmosphere. Analysis of the light signals can enable the state of atmospheric turbulence and hence distortions of atmospheric origin in real time to be determined with a high response frequency, even of the order of tens of Hertz.

By means of the control system 23, the variable magnetic field generator means 21 may thus make spatial and temporal point corrections in the mirror surface 10, even of the order of a hundredth of a millimetre.

The variable magnetic field generator means 21 may also function with a high response frequency to make corrections which take account not only of the optical distortions in the mirror surface 10 but also of the distortions of atmospheric origin in the wave front B from the heavens, in accordance with the principles of adaptive optics.

In the same manner, the variable magnetic field generator means 21 may be used to make microscopic variations in the profile of the mirror surface 10 in order to satisfy particular conditions of observation.

In addition to the advantages mentioned above, the mirror structure according to the invention requires high surface finishing only at a local level since any imperfections on a large scale may be corrected by means of the variable magnetic field generator means.

Moreover the use of the mirror structure described above results in a considerable reduction in the weight and bulk of machinery needed to move reflecting telescopes.

Moreover it is possible to make primary mirrors for reflecting telescopes without limits on their shape and dimensions.

Furthermore the periodic realuminating of the mirror structure, which is extremely expensive, is eliminated from the maintenance of the mirror structure since it is more convenient to replace the film of plastics material which supports the mirror surface or the entire sheet-like support.

The electromagnets may have a much higher density than the density of current linear actuators in the field of primary mirrors for reflecting telescopes whereby it is possible to effect more precise local control.

The preferred embodiment of the mirror structure according to the invention and of the reflecting telescope incorporating it described above may be subject to numerous variations and modifications, all of which fall within the scope of the inventive concept.

The reflecting telescope may equally well by of a type other than the Cassegrain type; it may, for example, be a Herschel, Newton or Gregory telescope and may use any mounting, the various equatorial mountings, altozimuth or zenithal.

The mirror structure of the invention, as well as being usable as the primary mirror, also known as the objective mirror of a reflecting telescope, may also be used as the secondary mirror or as the tertiary mirror.

The mirror structure of the invention also lends itself to other uses such as, for example, for large-sized reflectors with variable foci or as a reflector for electromagnetic waves of a frequency other than that of visible light.

The ferromagnetic layer may be partially or completely magnetised but may even be unmagnetised.

In this case the variable magnetic field generator means exert only a pull on the sheet-like support which must be self-supporting.

An unmagnetised ferromagnetic layer may comprise a film of rubber treated with ferrite, a film of plastics material with discrete ferromagnetic elements embedded in it, a thin metal sheet or a metallic mesh.

The variable magnetic field generator means may be constituted by electromagnets with resistive or superconductive windings.

In the second case it will be necessary to use cryogenic systems to maintain the operative temperature of the superconductive windings.

The electromagnets may be arranged in a regular matrix or in greater densities in regions where more precise corrections are required.

The sheet-like support may include further layers to give greater rigidity to the support itself, still with the condition that it is elastically deformable both by magnetic thrust and traction.

The system for monitoring the mirror surface may include systems based on laser or ultrasonic emissions or optical systems.

In addition to the variable magnetic field generator means, further mechanical, pneumatic or hydraulic linear actuators may be provided to effect large-scale corrections, for example in correspondence with the through-hole of the primary mirror or the rims.

It is understood that an expert in the art may make numerous variations to the mirror structure described above to satisfy various requirements, all of which are within the scope of protection as defined by the appended claims.

## Claims

1. A mirror structure (5) with active optics which has a flexible sheet-like support (8) and a mirror surface (10) formed on one face (9) of the sheet-like support (8), characterised in that it includes variable magnetic field generator means (21) in correspondence with the face of the sheet-like support (8) opposite the mirror surface (10), the sheet-like support including at least one ferromagnetic layer (19) and being elastically deformable under the action of the variable magnetic field generator means (21).

2. A mirror structure (5) according to Claim 1, in which the ferromagnetic layer (19) is at least partially permanently magnetised.

3. A mirror structure (5) according to Claim 1, in which the variable magnetic field generator means (21) include a plurality of electromagnets (22) arranged in a predetermined matrix and controlled individually by a control system (23).

4. A mirror structure (5) according to Claim 1, in which the sheet-like support (8) comprises a film (17) of plastics material which has an upper face (9) on which the mirror surface is formed by aluminating and a lower face (18) joined to the ferromagnetic layer (19).

5. A mirror structure (5) according to Claim 4, in which the ferromagnetic layer (19) is joined to the plastics film (17) by an epoxy glue (20).

6. A mirror structure (5) according to Claim 2, in which the ferromagnetic layer (19) comprises a magnetised rubber film.

7. A mirror structure (5) according to Claim 2, in which the ferromagnetic layer (19) comprises a film of plastics material in which discrete magnetised elements are embedded.

8. A reflecting telescope (1) including at least one mirror structure (5) according to any one of the preceding claims.

9. A reflecting telescope (1) according to Claim 8, in which the mirror structure (5) is intended to receive a wave front (B) from the heavens and to act as the primary mirror of the reflecting telescope (1).

10. A reflecting telescope (1) according to Claim 8, in which the variable magnetic field generator means (21) are controlled by a control system (23) sensitive to distortions of atmospheric origin.
